Europäisches Patentamt

European Patent Office

Office européen des brevets

(19)

(11) Numéro de publication : **0 277 880 B1**

# (12) FASCICULE DE BREVET EUROPEEN

(45) Date de publication du fascicule du brevet :
21.08.91 Bulletin 91/34

(51) Int. Cl.⁵ : **B62B 3/10**

(21) Numéro de dépôt : **88400237.9**

(22) Date de dépôt : **02.02.88**

(54) **Dispositif de manutention, en particulier pour magasins à libre service.**

(30) Priorité : **02.02.87 FR 8701192**

(43) Date de publication de la demande :
**10.08.88 Bulletin 88/32**

(45) Mention de la délivrance du brevet :
**21.08.91 Bulletin 91/34**

(84) Etats contractants désignés :
**AT BE CH DE ES FR GB GR IT LI LU NL SE**

(56) Documents cités :
**FR-A- 1 532 166**
**FR-A- 2 550 074**
**US-A- 2 672 218**
**US-A- 2 958 536**

(73) Titulaire : **Thouret, Guy**
**"L'Eté" Concourson sur Layon**
**F-49700 Doue la Fontaine (FR)**

(72) Inventeur : **Thouret, Guy**
**"L'Eté" Concourson sur Layon**
**F-49700 Doue la Fontaine (FR)**

(74) Mandataire : **Martin, Jean-Jacques et al**
**Cabinet REGIMBEAU 26, Avenue Kléber**
**F-75116 Paris (FR)**

EP 0 277 880 B1

Jouve, 18, rue Saint-Denis, 75001 PARIS

## Description

La présente invention concerne le domaine des dispositifs de manutention.

La présente invention trouve particulièrement application dans la manutention d'objets, à l'intérieur de magasins à libre service.

Dans de tels magasins, de nos jours, les articles achetés par le client, sont le plus souvent manutentionnés à l'aide de chariots mobiles à roulettes équipés d'un panier ouvert vers le haut apte à recevoir les articles, qui comporte un fond généralement horizontal et des parois latérales généralement verticales.

Ces chariots ont rendu de grands services ; néanmoins, ils présentent différents inconvénients.

En particulier, les chariots utilisés jusqu'ici imposent de nombreuses manipulations des articles achetés.

En effet, lorsque le client arrive aux caisses, en sortie du magasin à libre service, il doit vider le chariot sur une table le plus souvent équipée d'un tapis roulant. Les articles sont alors repris par la caissière pour enregistrement du prix correspondant. Les articles sont ensuite déposés par la caissière sur une table d'évacuation, généralement équipée également d'un tapis roulant.

Enfin, les articles sont récupérés par le client, pour être déposés dans un sac ou dans un nouveau chariot.

Toutes ces manipulations sont longues, fastidieuses et peuvent conduire à une détérioration des articles.

On a tenté de limiter le nombre de ces manipulations en adaptant les caisses de telle sorte que le caissière, après enregistrement du prix, au lieu de déposer les articles sur un tapis d'évacuation, puisse déposer directement ceux-ci dans un chariot.

Cette solution permet certes de limiter le nombre de manipulations. Néanmoins, le travail de la caissière reste très fastidieux. Le fait que la caissière remplisse elle-même le chariot conduit à une perte de temps.

Enfin et surtout cette solution crée une source nouvelle de litiges, lors de toute erreur de manipulation de la part de la caissière, ou de détérioration des articles suite à cette manipulation. Le plus souvent il est en effet difficile de déterminer si ces erreurs ou détériorations sont dues à la caissière, dans la mesure où le client ne contrôle pas l'état des articles placés dans le chariot par la caissière.

Par ailleurs, différents aménagements des chariots ont été proposés pour tenter de faciliter la manipulation des objets lors du chargement ou du déchargement des chariots.

Le document US-A-2958536 décrit un chariot adapté pour augmenter automatiquement de volume en fonction de la charge qu'il reçoit. Le chariot décrit dans ce document est un chariot mobile équipé d'un panier ouvert vers le haut apte à recevoir des articles à manutentionner et qui comporte un fond généralement horizontal et des parois latérales généralement verticales, dans lequel le fond est susceptible de translation verticale par rapport à au moins une partie de paroi latérale. Pour cela ce chariot comprend un fond mobile chargé par ressort qui s'abaisse sous l'effet de la charge placée dans le panier du chariot.

Le document FR-A-1532166 décrit un chariot pourvu d'une paroi latérale portée à pivotement autour d'un axe horizontal ou à translation sur le panier du chariot.

Le document FR-A-2550074 décrit un chariot dont le panier possède un côté ouvert en permanence. Le panier possède de plus des glissières horizontales recevant à coulissement des bacs amovibles.

le document US-A-2672218 décrit un chariot comprenant un panier supporté à pivotement sur une embase autour d'un axe vertical afin de pouvoir superposer le panier au comptoir.

Les différents aménagements proposés dans les documents précités ne donnent cependant pas entière satisfaction et de ce fait ne sont pas utilisés dans la pratique. Ces aménagements conduisent à la réalisation de chariots complexes et coûteux, sans faciliter réellement la manipulation des objets.

la présente invention a pour but d'éliminer les inconvénients des dispositifs de manutention antérieurs et propose à cet effet un nouveau dispositif de manutention du type comprenant de façon connue en soi, un chariot mobile équipé d'un panier ouvert vers le haut apte à recevoir les articles à manutentionner, qui comporte un fond généralement horizontal et des parois latérales généralement verticales, dans lequel le fond est susceptible de translation verticale par rapport à au moins une partie de paroi latérale, caractérisé par le fait que le chariot comprend des moyens de verrouillage aptes à immobiliser le fond et ladite partie de paroi latérale dans une position relative, pour former un panier rigide apte à recevoir des articles et que le dispositif de manutention comprend en outre, au niveau d'un poste de déchargement, un dispositif élévateur apte à assurer un déplacement vertical relatif entre le fond du panier et ladite partie de paroi latérale, pour faciliter l'accès aux articles reposant sur le fond du panier.

Comme cela sera explicité plus en détail par la suite, grâce à un tel chariot et à un tel dispositif élévateur, il n'est plus nécessaire que le client dépose sur une table ou un tapis les articles qu'il souhaite acheter. La caissière peut sans difficulté prélever elle-même les articles dans le chariot. Ce prélèvement est rendu possible notamment par le fait que le fond du panier est soulevé en assurant ainsi un déplacement vertical relatif entre le fond du panier et au moins une partie de paroi latérale du panier pour faciliter l'accès aux articles contenus dans le panier du chariot.

Selon une première variante de réalisation de la présente invention, le panier comprend au moins une partie de paroi latérale formant portillon amovible, guidée à translation verticale sur le corps du chariot dont est solidaire le fond du panier, et le chariot comprend de plus des moyens de verrouillage aptes à immobiliser sélectivement le portillon sur le corps du chariot pour fermer le côté correspondant du panier.

Selon une seconde variante de réalisation de la présente invention, le fond du panier est guidé à translation verticale sur le corps du chariot et le chariot comprend de plus des moyens de verrouillage aptes à immobiliser sélectivement le fond en partie inférieure du panier. De façon avantageuse, le fond du panier qui est guidé à translation verticale sur le corps du chariot, est solidaire d'une partie au moins d'une paroi latérale du panier, par exemple de deux parois latérales orthogonales du panier.

Selon l'invention, l'élément mobile par rapport au corps de chariot (portillon latéral selon la première variante de réalisation ou fond du panier selon la seconde variante de réalisation) est guidé à translation dans des glissières verticales ménagées sur le chariot. En variante l'élément mobile peut être muni d'anneaux guidés à translation sur des tiges verticales solidaires du corps de chariot.

Selon une caractéristique avantageuse de l'invention, dans le cadre de la première variante de réalisation, les moyens de verrouillage sont adaptés pour guider le portillon latéral à pivotement autour d'un axe horizontal adjacent à la génératrice supérieure du portillon.

Dans ce contexte, de préférence, le chariot comprend une embase munie d'une pluralité de roulettes et un panier supporté par l'embase, par l'intermédiaire de deux montants, ces montants étant raccordés au panier en position adjacente au côté de celui-ci, délimité au moins partiellement par le portillon amovible.

Selon une autre caractéristique avantageuse de l'invention, le chariot peut comprendre une poignée déplaçable entre une position d'utilisation dans laquelle la poignée s'étend horizontalement et est fixée rigidement sur le corps du panier pour être tenue par l'utilisateur pour pousser le chariot, et une position de stockage dans laquelle la poignée s'étend sensiblement verticalement, en position adjacente à un côté du panier délimité par une paroi apte à pivoter autour d'un axe horizontal.

Selon une première variante de réalisation, les moyens de verrouillage comprennent des taquets amovibles portés par l'élément mobile (fond du panier ou portillon latéral) ou le corps du panier, des butées complémentaires solidaires du corps de panier ou de l'élément mobile et des moyens élastiques aptes à solliciter les taquets en prise avec les butées, tout en autorisant le retrait des taquets en position escamotée, dans laquelle les taquets ne sont plus en prise avec lesdites butées.

Selon une seconde variante de réalisation, les moyens de verrouillage comprennent des taquets solidaires de l'élément mobile (fond du panier ou portillon latéral) ou du corps de panier, des butées complémentaires amovibles portées par le corps de panier ou l'élément mobile et des moyens élastiques aptes à solliciter les butées en prise avec les taquets, tout en autorisant le retrait des butées, en position escamotée, dans laquelle les taquets ne sont plus en prise avec lesdites butées.

Selon la présente invention, le dispositif élévateur comprend en outre de préférence des moyens d'arrimage aptes à venir en prise avec la partie du panier mobile par rapport au fond, des moyens de commande d'ouverture aptes à coopérer avec les moyens de verrouillage du chariot pour autoriser sélectivement un déplacement vertical relatif entre cette partie du panier et le fond du panier.

D'autres caractéristiques, buts et avantages de la présente invention apparaîtront à la lecture de la description détaillée qui va suivre, et en regard des dessins annexés donnés à titre d'exemples non limitatifs et sur lesquels :

— la figure 1 représente une vue schématique en perspective d'un chariot conforme à un premier mode de réalisation de la présente invention muni d'un portillon latéral amovible, en position d'utilisation,

— la figure 2 représente une vue schématique en perspective du même chariot, et illustre plus précisément le déplacement vertical relatif du corps de panier et du portillon latéral amovible,

— la figure 3 représente une vue schématique de dessus d'un système de caisse conforme à la présente invention apte à recevoir le panier illustré sur les figures 1 et 2,

— la figure 4 représente une vue schématique en perspective d'un chariot conforme à un second mode de réalisation de la présente invention comportant un autre portillon latéral amovible et illustre un déplacement vertical relatif du corps de chariot et du portillon latéral amovible,

— la figure 5 représente une vue schématique de dessus d'un ensemble de caisses aptes à recevoir le chariot illustré sur la figure 4,

— la figure 6 représente une vue schématique en perspective d'un chariot conforme à un troisième mode de réalisation de la présente invention, comportant un portillon latéral amovible,

— la figure 7 représente une autre vue schématique en perspective du chariot conforme au troisième mode de réalisation de la présente invention, et illustre plus précisément le déplacement vertical relatif du corps du panier et du portillon latéral amovible,

— la figure 8 représente une autre vue schématique en perspective du chariot conforme au troisième mode de réalisation de la présente invention et illustre plus précisément le pivotement d'un portillon latéral amovible, par rapport au corps de panier pour permettre d'enfiler les chariots à des fins de stockage,

— les figures 9 et 10 illustrent respectivement deux variantes de réalisation des moyens guidant le portillon latéral amovible à translation verticale sur le corps d'un panier,

— les figures 11 et 12 illustrent un volet pivotant sur un cadre formé par un portillon composé de deux parois orthogonales, pour permettre d'enfiler les chariots,

— la figure 13 illustre un autre mode de réalisation de chariot dans lequel le fond un panier est mobile à translation verticale par rapport au corps du chariot,

— la figure 14 illustre un autre mode de réalisation de chariot, dans lequel un ensemble comprenant un fond solidaire de deux parois latérales orthogonales est mobile à translation verticale par rapport au corps de chariot,

— les figures 15 et 16 illustrent schématiquement la structure de moyens de verrouillage conforme à la présente invention, les figures 15 et 16 représentant respectivement ces moyens en coupe verticale et en coupe horizontale,

— la figure 17 illustre schématiquement les différents étapes d'utilisation d'un chariot conforme à la présente invention, au niveau des caisses prévues en sortie d'un magasin,

— la figure 18 illustre une variante de réalisation, dérivée du mode de réalisation illustré sur la figure 14,

— les figures 19 et 20 illustrent une autre variante de réalisation, dérivée du mode de réalisation illustré sur la figure 14, et

— la figure 21 illustre schématiquement un dispositif élévateur apte à coopérer avec cette dernière variante de réalisation.

On aperçoit sur les figures annexées, un chariot 10 qui comprend pour l'essentiel un panier 20 porté par une embase 40 munie de roulettes 41, 42, 43 et 44.

Le panier 20 est porté par deux montants 50, 51 (schématiquement représentés sur les figures annexées) fixés à l'embase 40.

Le chariot comprend en outre une poignée 60.

La panier 20 est ouvert vers le haut. Il est composé de 4 côtés référencés 21, 22, 23 et 24 et d'un fond 26.

De préférence, la section horizontale du panier 20 est sensiblement rectangulaire. En d'autres termes les côtés sont sensiblement parallèles deux à deux, 21, 23 d'une part, 22, 24 d'autre part. Ils ont de plus deux à deux des longueurs horizontales sensiblement identiques, la longueur horizontale de deux côtés, généralement parallèles, 21, 23, étant supérieure à la longueur horizontale des deux autres côtés 22, 24.

Dans la suite de la description les côtés 21, 23 les plus longs, qui s'étendent parallèlement au sens de déplacement normal, seront dénommés côtés longitudinaux du chariot, tandis que les deux autres côtés 22, 24, plus courts, et perpendiculaires au sens de déplacement normal du chariot, seront dénommés côtés transversaux.

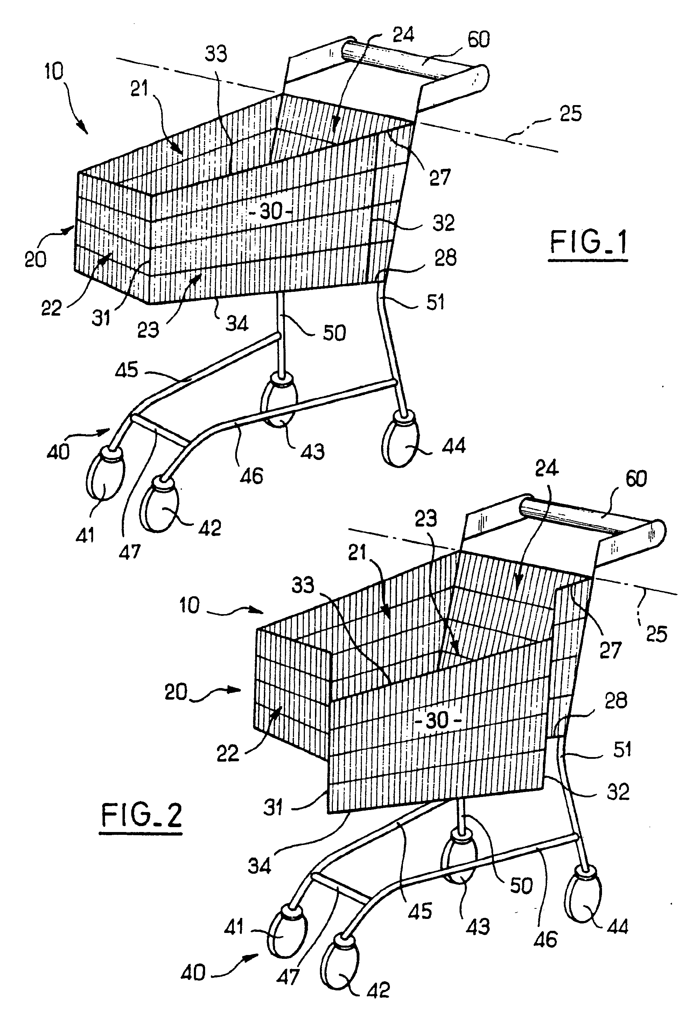

De préférence, et comme cela est classique en soi, les côtés 21 à 24 et le fond 26 du panier 20 sont formés d'un treillis métallique soudé. De même, l'embase 40 portant les roulettes 41 à 44 est formée par assemblage soudé de tiges métalliques 45, 46, 47. Selon l'illustration donnée sur la figure 1, l'embase est ainsi formée de deux longerons 45, 46 et d'une traverse 47.

La structure générale d'une telle embase 40, des montants 50, 51, et de la poignée 60, classique en soi, ne sera pas décrite plus en détail par la suite.

On notera également que la géométrie de ces éléments représentée sur les figures annexées n'est donnée qu'à titre d'illustration non limitative.

Néanmoins, l'homme de l'art comprendra aisément à l'examen des figures annexées que, comme cela est classique en soi, les différents éléments du chariot 10 sont de préférence adaptés pour permettre d'enfiler les chariots l'un dans l'autre, afin de limiter l'encombrement au stockage.

Pour cela, une paroi latérale du panier, référencée 24 sur les figures 1, 2 et 4 est formée d'un élément qui est monté à pivotement, vers l'intérieur du panier 20, autour d'un axe 25 horizontal et au moins sensiblement adjacent à la génératrice supérieure du côté correspondant.

De plus, le panier 20 et l'embase 40 sont généralement effilé en éloignement de la paroi 24 précitée.

Par exemple, les longerons 45, 46 composant l'embase 40, convergent en éloignement de la paroi 24. La paroi 22 opposée à la paroi 24 possède une longueur horizontale inférieure à celle de la paroi 24; ainsi, les parois longitudinales 21 et 23 convergent en éloignement de la paroi 24. De plus, les génératrices supérieures et inférieures des parois longitudinales 21 et 23, référencées 27 et 28 sur la figure 1 pour ce qui concerne la paroi longitudinale 23, convergent en éloignement de la paroi 24.

Par ailleurs, la poignée 60 qui s'étend sensiblement horizontalement et est adaptée pour être saisie par l'utilisateur pour pousser le chariot, est raccordée à celui-ci en partie supérieure de la paroi 24 précitée. De même, les montants 50, 51 sont raccordés au panier 20 en position adjacente à la paroi 24 susceptible de pivotement.

Comme indiqué précédemment, selon la première variante de réalisation comme à la présente invention, une partie d'une paroi latérale du panier est formée d'un portillon amovible 30 guidé à translation verticale sur le corps du chariot.

Selon le mode de réalisation illustré sur les figures 1 et 2, le portillon latéral amovible 30 couvre la majeure partie d'une paroi longitudinale référencée 23. Cette paroi longitudinale 23 qui forme le portillon coulissant 30 est orthogonale à la paroi transversale pivotante 24.

Le portillon 30 illustré sur les figures 1 et 2 est formé d'un cadre plan portant un treillis. Le cadre est composé de deux montants verticaux parallèles 31, 32 reliés entre eux par des traverses généralement horizontales 33, 34. En position d'utilisation, telle qu'illustrée sur la figure 1, les traverses 33, 34 coïncident avec les génératrices supérieure et inférieure 27, 28 de la paroi longitudinale 23.

La chariot conforme à la présente invention comprend en outre des moyens de verrouillage aptes à immobiliser sélectivement le portillon 30 sur le corps de chariot pour fermer le côté correspondant de celui-ci comme illustré sur la figure 1. Lorsque le portillon 30 est ainsi immobilisé sur le corps de chariot par les moyens de verrouillage, le panier forme une structure rigide et le panier peut être utilisé pour manutentionner les articles dans un magasin. Par contre aux caisses, le portillon 30 peut être abaissé par rapport au fond du panier pour faciliter l'accès aux articles.

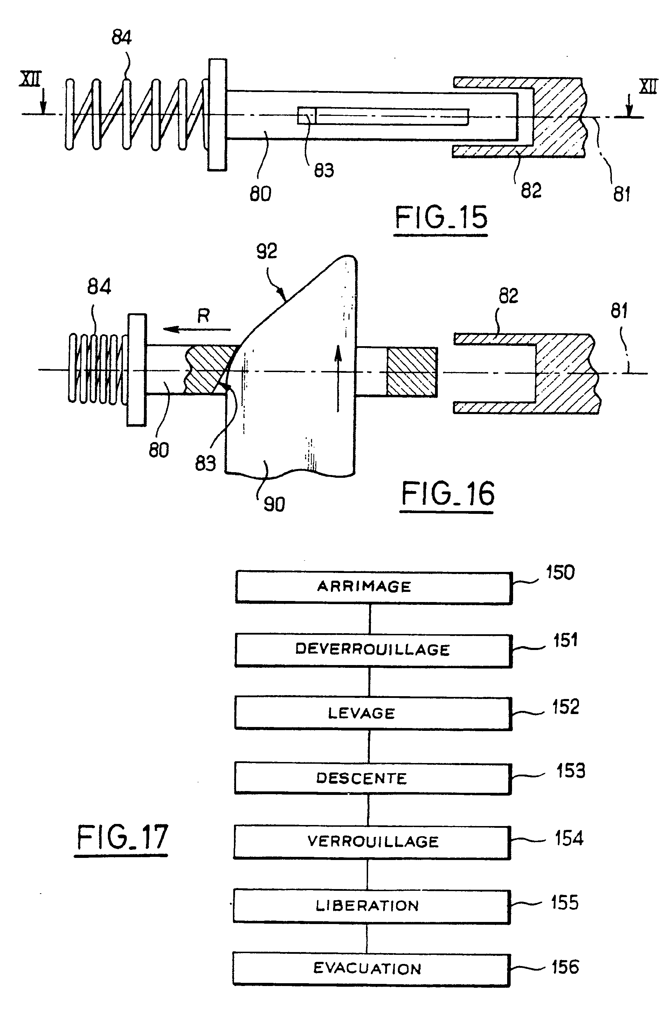

On évoquera par la suite la structure de moyens de verrouillage conformes à la présente invention, notamment en regard des figures 15 et 16.

De nombreux moyens peuvent être prévus pour guider le portillon latéral amovible 30 à translation verticale sur le corps de panier 20.

On ne va pas décrire l'ensemble de modes de réalisation susceptibles d'être retenus dans le cadre de la présente invention pour la conception de ces moyens de guidage.

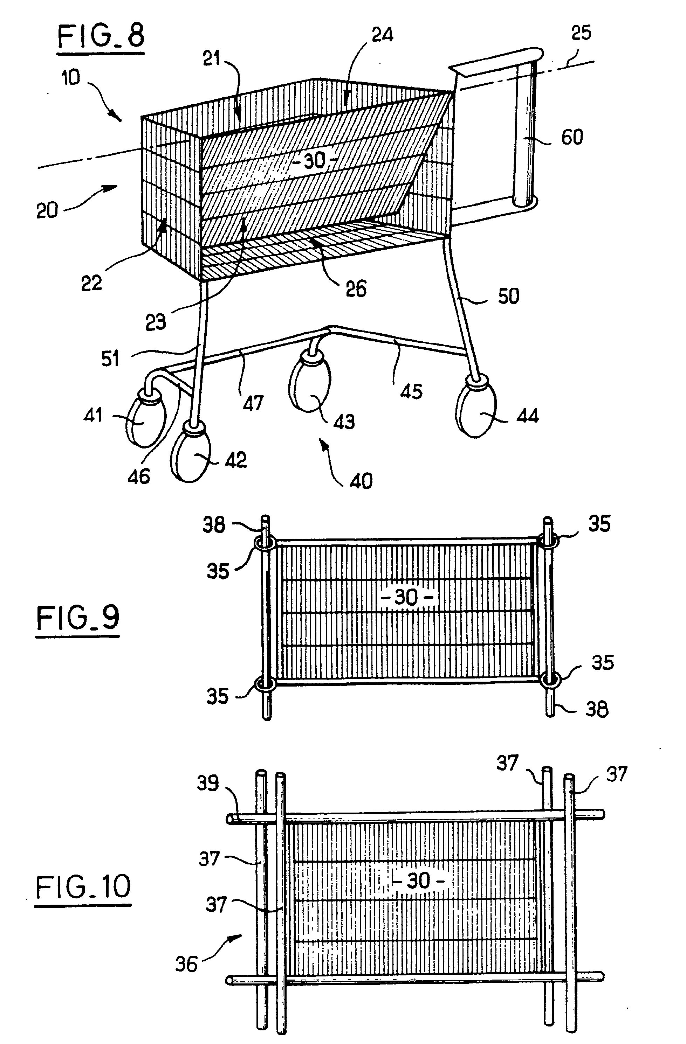

Néanmoins, on notera que, comme cela est représenté sur la figure 9, le portillon latéral amovible 30 peut être muni d'anneaux 35 guidés à translation sur des tiges verticales 38 solidaires du panier.

Par ailleurs, comme cela est illustré sur la figure 10, le portillon latéral 30 peut être guidé à translation dans des glissières verticales 36 ménagées sur le chariot. Ces glissières 36 peuvent par exemple être composées chacune d'une paire de tiges métalliques verticales parallèles 37 ou d'un canal correspondant, solidaire du chariot, et recevant, à coulissement vertical, des tétons 39 solidaires du portillon amovible 30.

Bien entendu, une disposition inverse peut être prévue. C'est-à-dire que les glissières 36 peuvent être prévues sur le portillon latérale 30 pour recevoir des tétons solidaires du corps de chariot.

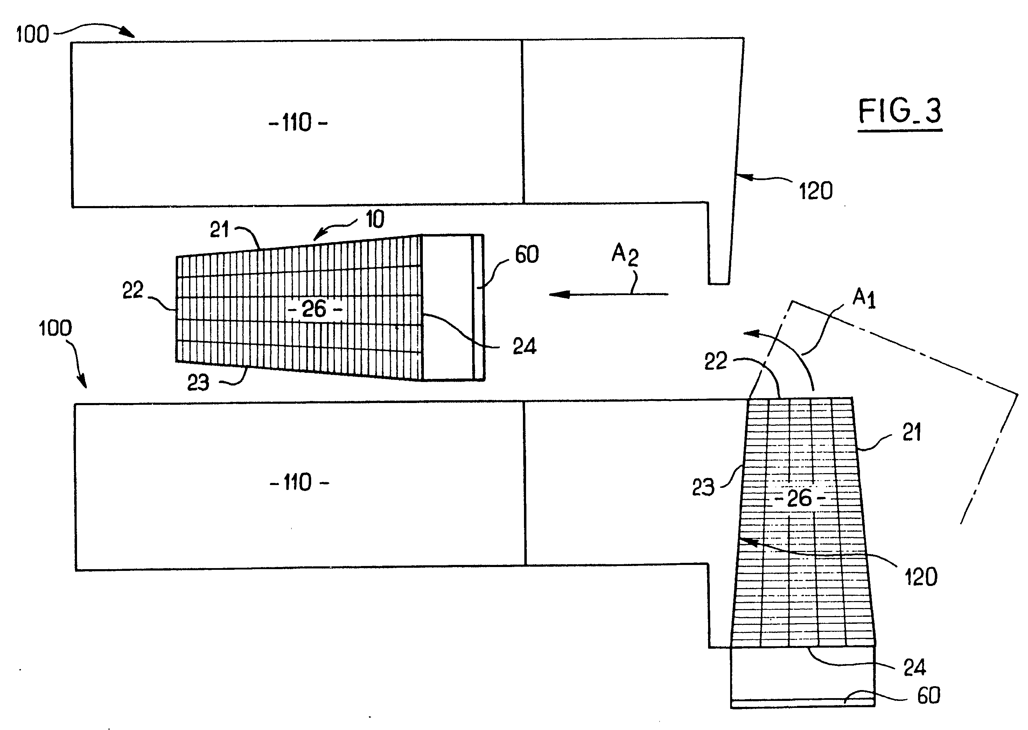

On a illustré schématiquement sur la figure 3 un ensemble de caisses susceptibles de recevoir le chariot illustré sur les figures 1 et 2 précédemment décrit.

De façon classique en soi, chacune des caisses 100 comprend un tapis roulant d'évacuation 110 sur lequel chaque caissière dépose les articles, après enregistrement du prix correspondant.

Par ailleurs, selon la présente invention, il est en outre prévu, au niveau de chaque caisse, un dispositif élévateur de chariot qui comprend des moyens d'arrimage, des moyens de commande d'ouverture et des moyens élévateurs.

Les moyens d'arrimage sont adaptés pour venir en prise avec le portillon amovible 30 du chariot.

Les moyens de commande d'ouverture sont adaptés pour coopérer avec les moyens de verrouillage du portillon pour autoriser sélectivement un déplacement vertical relatif entre le portillon 30 et le chariot 10.

Les moyens élévateurs enfin sont adaptés pour soulever progressivement le corps du chariot dont est solidaire le fond du panier par rapport au portillon latéral 30.

On va maintenant décrire le fonctionnement d'un tel dispositif élévateur, en regard de la figure 17.

Lorsque l'utilisateur a achevé le remplissage du chariot 10, il vient placer celui-ci contre la face 120 de la caissé, équipée des moyens d'arrimage et des moyens de commande d'ouverture.

Comme illustré à l'étape 150 sur la figure 17, des moyens d'arrimage viennent en prise avec le portillon amovible 30 pour fixer celui-ci contre la paroi 120.

Comme illustré à l'étape référencée 151 sur la figure 17, simultanément on ultérieurement, les moyens de commande d'ouverture agissent sur les moyens de verrouillage du portillon 30 pour autoriser un déplacement vertical relatif entre le portillon 30 et le corps de chariot 10.

Comme illustré par l'étape référencée 152 sur la figure 17, la caisssière peut alors mettre en service les moyens élévateurs afin de soulever progressivement le corps du chariot 10.

Le portillon amovible 30 restant fixé contre la paroi 120 de la caisse, la face latérale correspondante du panier 20 est progressivement libérée au cours de l'élévation du chariot. Ainsi, la caissière peut, sans difficulté, vider progressivement celui-ci.

Lorsque la caissière a vidé complètement le chariot, et que, par conséquent, tous les prix des articles retenus par le client ont été enregistrés, la caissière commande la désactivation des moyens élévateurs pour entraîner la descente du chariot 10, comme illustré à l'étape référencée 153 sur la figure 17.

Les moyens de commande prévus sur la face 120 des caisses peuvent alors reporter les moyens de verrouillage associés au portillon amovible 30, en position de fermeture, pour immobiliser le portillon 30 dans la position illustrée sur la figure 1, dans laquelle ce portillon ferme le côté correspondant du panier.

Comme illustré par l'étape référencée 155 sur la figure 17, les moyens d'arrimage peuvent alors être désactivés pour libérer le portillon amovible 30.

Le chariot 10 est alors disponible pour une nouvelle utilisation.

Il peut être déplacé à la main, de façon classique en soi, par du personnel ou par les clients du magasin.

Le cas échéant, le système de caisse 100 peut être équipé de moyens aptes à évacuer le chariot, comme illustré à l'étape référencée 156 sur la figure 17.

Ces moyens d'entraînement, de préférence, sont adaptés, comme illustré sur la figure 3 par les flèches référencées A1 et A2, pour assurer un pivotement de 90° du chariot, afin d'aligner celui-ci avec l'intervalle entre deux caisses adjacentes, puis une translation du chariot en direction de la sortie du tapis roulant 110 pour permettre aux clients, s'ils le désirent, de replacer des articles achetés, après enregistrement, dans un tel chariot.

L'homme de l'art comprendra aisément que les moyens élévateurs pourront faire l'objet de nombreux modes de réalisation.

A titre d'exemple, les moyens élévateurs pourront être composés de vérins, ou de croisillons de type cric.

Les moyens élévateurs pourront également comprendre, en variante, des systèmes de chaînes à taquets entraînés par moteur.

Les moyens élévateurs précités peuvent venir en prise avec un élément quelconque du corps de chariot, indépendant du portillon amovible 30, pourvu que les points d'appui des moyens élévateurs sur le chariot respectent l'équilibre de ce dernier.

Ainsi, les moyens élévateurs pourront venir en appui contre le fond 26 du chariot, venir en prise avec l'embase 40, ou encore venir en prise avec des boucles ou points d'appui spécifiques prévus sur le panier, par exemple sur les parois latérales de celui-ci.

Le cas échéant, au lieu d'immobiliser le portillon latéral 30 et de soulever le corps de chariot pour faciliter l'accès aux articles, on peut envisager d'immobiliser le corps de chariot et d'abaisser le portillon latéral 30.

On notera que dans le cadre de la présente invention les caisses 100 ne nécessitent pas de tapis roulant d'entrée sur lesquels les clients vident leur chariot usuellement. Les caisses 100 s'en trouvent notablement réduites en longueur.

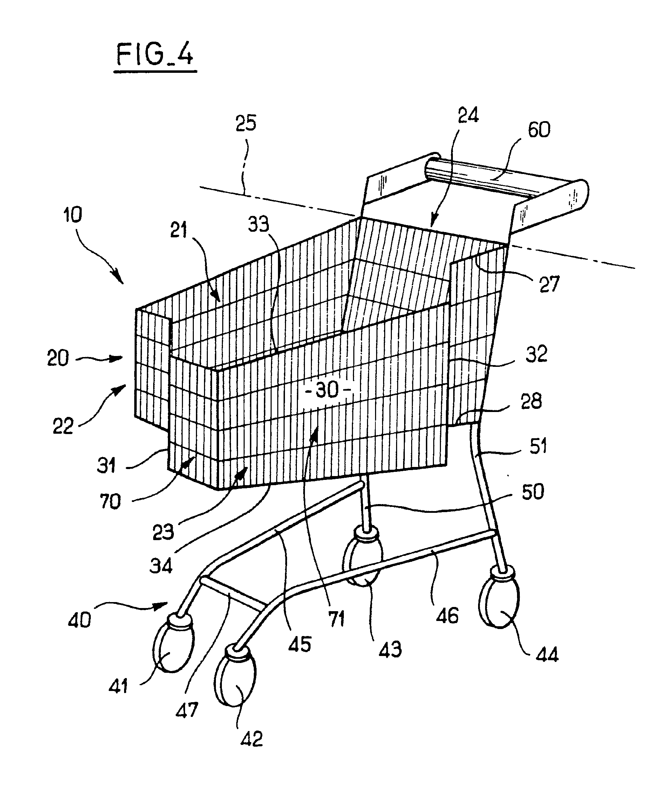

On a illustré sur la figure 4 un autre mode de réalisation du chariot conforme à la première variante de réalisation de la présente invention, dans lequel la portillon amovible 30 est formé de deux éléments rigides sensiblement orthogonaux, référencés 70 et 71.

Ces deux éléments correspondant respectivement à une partie des parois latérales 22, 23 du panier.

Plus précisément, l'élément 70 correspond à une partie de la paroi transversale 22 opposée à la paroi pivotante 24. L'élément 71 correspond à une partie de la paroi longitudinale 23, orthogonale à la paroi pivotante 24.

Là encore, le portillon amovible 30 illustré sur la figure 4 est guidé à translation verticale sur le corps du panier 20, tandis qu'il est prévu des moyens de verrouillage aptes à immobiliser sélectivement le portillon sur le corps de panier pour fermer le côté correspondant de celui-ci.

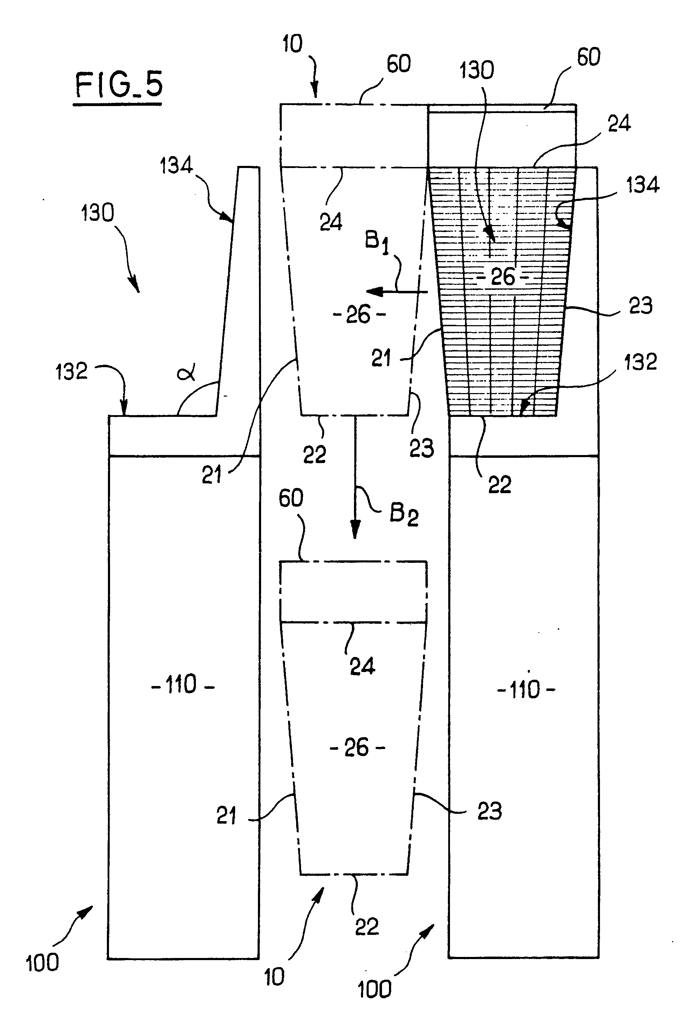

Comme illustré sur la figure 5, dans un tel cas, l'ensemble de caisses 100 comprend un logement 130, délimité par deux parois généralement verticales 132, 134, équipé des moyens d'arrimage et des moyens de commande d'ouverture précités, les parois 132, 134 présentant une inclinaison relative $\alpha$ qui correspond à l'inclinaison relative des deux éléments 70, 71 composant le portillon amovible 30.

Bien entendu, le logement 130 est également pourvu de moyens élévateurs aptes à soulever le corps du chariot 10 par rapport au portillon latéral amovible lorsque le portillon 10 est fixé contre un carter de caisse 100, ou encore pour abaisser le portillon latéral 30 par rapport au corps de chariot si celui-ci est fixé sur le carter de caisse 100.

Les moyens d'arrimage, les moyens de commande d'ouverture et les moyens élévateurs précédemment évoqués sont adaptés pour respecter la cinématique du fonctionnement illustré sur la figure 17.

Par ailleurs, là encore, l'ensemble de caisses 100 peut être muni de moyens d'entraînement aptes à assurer l'évacuation du chariot 10 (étape 156 sur la figure 17), comme illustré schématiquement par les flèches référencées B1 et B2 sur la figure 5. Selon cette figure 5, les moyens d'entraînement précités déplacent le chariot 10 à translation selon deux directions successives orthogonales entre elles, B1, B2, pour aligner le chariot avec l'intervalle entre deux caisses.

On a illustré schématiquement sur les figures 1, 2 et 4 deux modes de réalisation d'un chariot conforme à la présente invention comportant, d'une part, une paroi transversale 24 apte à pivoter autour d'une axe horizontal 25 pour assurer l'enfilage des chariots en vue du stockage et, d'autre part, un portillon amovible 30 séparé de la paroi pivotante 24, guidé à translation verticale sur le corps du panier pour faciliter la préhension des articles par la caissière.

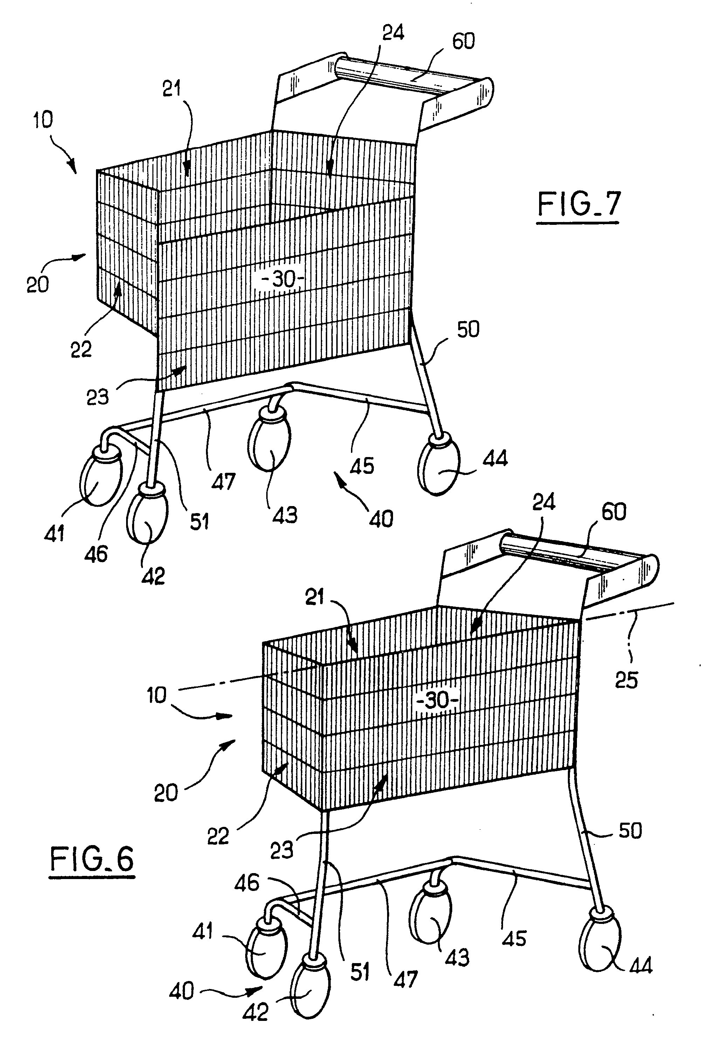

On va maintenant décrire un troisième mode de réalisation d'un chariot conforme à la présente invention, illustré sur les figures 6, 7 et 8, selon lequel la paroi pivotante autour d'un axe horizontal 25 pour permettre un enfilage des chariots coïncide avec le portillon latéral amovible guidé à translation sur le corps du panier.

Sur la figure 6, on a représenté le chariot en position verrouillée du portillon latéral amovible 30. Le panier 20 est alors complété de tous côtés et peut être rempli par l'utilisateur.

On a illustré sur la figure 7 la possibilité de déplacement vertical entre le portillon amovible 30 et le corps du panier.

Enfin, on a illustré sur la figure 8 la possibilité de pivotement du portillon amovible 30 autour d'un axe horizontal 25 coïncidant sensiblement avec la génératrice supérieure du côté longitudinal 23 couvert par le portillon amovible 30.

Le guidage à pivotement du portillon 30 peut être assuré par les moyens de verrouillage eux-mêmes.

On a illustré sur les figures 15 et 16 des moyens de verrouillage aptes à assurer une telle fonction.

Selon le mode de réalisation illustré sur les figures 15 et 16, ces moyens de verrouillage comprennent des taquets amovibles 80 formés de doigts allongés d'axe 81 horizontal, portés par le portillon 30, de butées complémentaires 82 solidaires du corps de panier 20, et de moyens élastiques 84 aptes à solliciter les taquets 80 en prise avec les butées 82, comme illustré sur la figure 15, tout en autorisant le retrait des taquets en position escamotée, comme illustré sur la figure 16, dans laquelle les taquets 80 ne sont plus en prise avec les butées 82. Les butées 82 sont de préférence formées de logements cylindriques complémentaires de la section des taquets 80.

Ainsi, lorsque les taquets 80 sont sollicités en prise avec les butées 82 par les moyens élastiques 84 (figure 15), ces taquets 80 peuvent servir de tourillons d'articulation pour le portillon amovible 30 afin de guider celui-ci à pivotement autour de l'axe horizontal 25.

Par contre, lorsque les taquets 80 sont déplacés en position escamotée à l'encontre de la sollicitation élastique des moyens 84 (figure 16), les taquets 80 autorisent une translation verticale relative entre le portillon amovible 30 et le corps de panier 20.

Le cas échéant, le guidage à translation du portillon amovible 30 peut être assuré par les taquets 80 eux-mêmes, guidés à coulissement dans des glissières verticales.

Bien entendu, on peut envisager de placer des taquets 80 sur le corps de panier 20 lui-même, et de placer les butées associées 82 sur le portillon amovible 30.

Par ailleurs, si, selon le mode de réalisation qui vient d'être décrit, les butées 82 sont fixes tandis que les taquets 80 sont mobiles et sollicités élastiquement, on peut prévoir la disposition inverse, c'est-à-dire de rendre les taquets 80 fixes et solidaires soit du portillon amovible 30, soit du panier 20, tandis que les butées 82 seraient mobiles et sollicitées élastiquement, soit sur le corps de panier 20, soit sur le portillon amovible 30.

Là encore, de nombreux moyens peuvent être retenus pour assurer le débrayage des taquets 80 et des butées complémentaires 82.

Ces moyens peuvent comprendre à titre d'exemple des moyens électromagnétiques, ou des moyens d'entraînement venant en prise avec les taquets 80 et déplacés parallèlement à l'axe 81 de ceux-ci, à l'encontre de la sollicitation des moyens 84, ou encore comme illustré sur les figures 15 et 16 des moyens d'entraîne ment 90 déplacés perpendiculairement à l'axe 81 des taquets 80 et venant en prise avec une surface 82 formant came de ceux-ci pour exercer sur les taquets 80 une force dont la résultante R est parallèle à l'axe 81 des taquets et de sens opposé à la sollicitation des moyens élastiques 84. Pour cela, les moyens d'entraînement 90 et/ou la surface 83 formant came possède une surface de commande 92 inclinée par rapport à la direction de déplacement relatif taquet/moyen d'entraînement.

En l'espèce les moyens d'entraînement 90 peuvent être formés de palettes horizontales fixées sur les surfaces 120 ou 132, 134 des caisses. Dans un tel cas les palettes 90 viennent en prise avec les taquets 80 lorsque le chariot est plaqué contre le carter de caisse. Les palettes 90 jouent alors le rôle de moyens d'arrimage et de moyens de commande d'ouverture.

On notera que, selon le mode de réalisation illustré sur les figures 6, 7 et 8, pour lequel le portillon amovible 30 susceptible de coulissement vertical correspond à la paroi pivotante du chariot, les montants 50, 51 supportant le panier sont raccordés à celui-ci en position adjacente au côté du panier délimité par le portillon amovible 30.

Dans un tel cas, pour autoriser l'enfilage des chariots, en vue d'un stockage, l'embase 40 et le panier 20 sont généralement effilés en éloignement du portillon amovible 30.

Néanmoins, pour permettre à la caissière d'accéder facilement aux objets contenus dans le chariot 10, le portillon amovible 30, qui est généralement pivotant, est, selon le troisième mode de réalisation, prévu sur l'un des grands côtés (côté longitudinal 23) du panier 20. Pour éviter un trop fort encombrement dans les couloirs du magasin, le sens de déplacement du chariot, qui correspond toujours au sens de la longueur du panier, est alors parallèle au portillon pivotant. Il en résulte que, à la différence des chariots généralement proposés jusqu'ici, la poignée 60 s'étend perpendiculairement au portillon pivotant 30.

Pour assurer néanmoins l'enfilage des chariots, au stockage, la poignée 60 peut être prévue inclinée sur l'horizontale, de telle sorte que, lors de l'enfilage des chariots, les poignées 60 s'engagent les unes sous les autres.

Selon encore une autre variante de réalisation conforme à la présente invention, pour autoriser l'enfilage des chariots lorsque la poignée 60 s'étend perpendiculairement au portillon pivotant, on peut envisager d'utiliser une poignée 60 déplaçable entre une position d'utilisation représentée sur les figures 6 et 7 dans laquelle la poignée s'étend horizontalement et est fixée rigidement sur le corps du panier pour être tenue par l'utilisateur, et une position de stockage illustrée sur la figure 8 dans laquelle la poignée s'étend sensiblement verticalement, en position adjactente, au côté du panier délimité par la paroi pivotante 30.

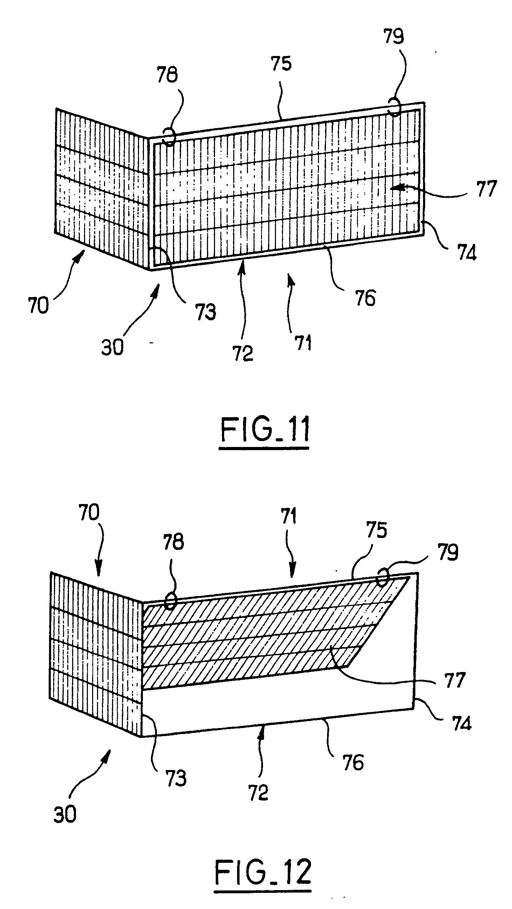

On a illustré sur les figures 11 et 12 un autre mode de réalisation de portillon amovible 30 dérivé du mode de réalisation précédemment décrit en regard de la figure 4.

Pour l'essentiel le portillon 30 illustré sur les figures 11 et 12 comprend également deux éléments orthogonaux 70, 71. L'élément 70 est formé d'une partie au moins d'une paroi transversale 22 (ou le cas échéant de la totalité de la paroi transversale 22). L'élément 71 est formé d'une partie de la paroi longitudinale 23 (ou le cas échéant de la totalité de la paroi longitudinale 23). L'élément 71 comprend plus précisément un cadre 72 et un volet pivotant 77. Le cadre 72 est constitué de deux montants verticaux 73, 74 et de deux traverses horizontales 75, 76. Le volet 77, constitué d'un treillis métallique, est monté à pivotement sur la traverse horizontale supérieure 75 par l'intermédiaire de deux anneaux 78, 79 pour permettre d'enfiler les chariots en vue du stockage.

Sur la figure 11 le volet 77 est vertical, de façon classique en soi le cadre 72 interdit son pivotement vers l'extérieur du panier.

Sur la figure 12 le volet 77 est représenté partiellement pivoté vers l'intérieur du panier.

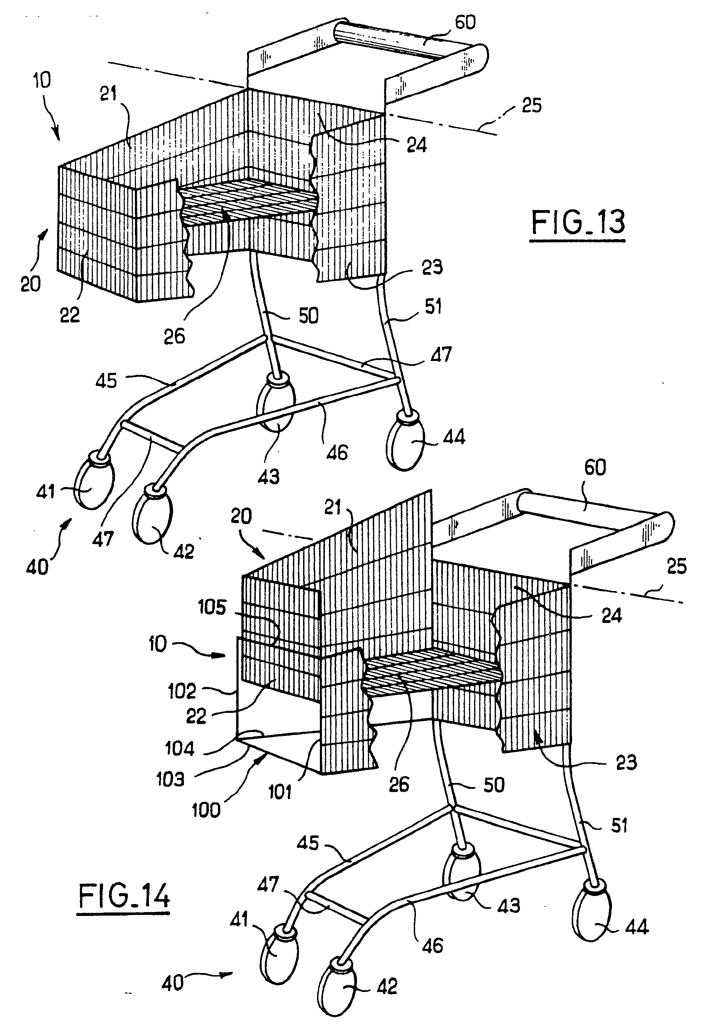

On a représenté sur la figure 13 un autre mode de réalisation de chariot conforme à la seconde variante de réalisation de la présente invention. Une partie de la paroi longitudinale 23 a été arrachée pour mieux faire comprendre la structure du dispositif. Selon ce mode de réalisation, le fond 26 du panier est guidé à translation verticale sur le corps de panier dont les parois latérales 21 à 24 sont reliées rigidement entre elles et solidaires du corps de chariot. De nombreux moyens de guidage peuvent être retenus pour guider le fond 26 sur le corps de panier. Ces moyens de guidage ne seront donc pas décrits par la suite.

Les moyens de verrouillage limitant le déplacement relatif corps de panier 20/fond 26 peuvent être formés simplement de butées limitant l'abaissement du fond 26 lorsque celui-ci atteint l'extrémité inférieure du panier 20.

Dans le cadre du mode de réalisation illustré sur la figure 13, il suffit que les moyens élévateurs viennent en prise avec le fond 26 et le soulèvent pour faciliter l'accès aux articles contenus dans la panier.

La paroi transversale 24 est également pivotante, autour de l'axe horizontal 25, sur le corps de chariot, pour permettre d'enfiler les chariots.

On a illustré sur la figure 14, un autre mode de réalisation dérivé de celui illustré sur la figure 13.

En effet, là encore, le fond 26 du panier 20 est mobile à translation verticale par rapport au corps de panier. Cependant, selon le mode de réalisation illustré sur la figure 14, le fond 26 est solidaire de deux parois latérales orthogonales 22 et 21 du panier. Celles-ci sont guidées à translation verticale sur le corps de panier. La paroi 22 est la paroi transversale, opposée à la paroi pivotantes 24. La paroi 21 est une paroi longitudinale.

Le mode de réalisation représenté sur la figure 14 présente comme intérêt, par rapport au mode de réalisation représenté sur la figure 13 que, lorsque le fond 26 du panier est soulevé, les articles qu'il porte ne se déplacent pas par rapport aux parois latérale 21 et 22 puisque celles-ci suivent le fond 26. Le frottement des articles contre les parois du panier et limité.

Le cas échéant, les parois latérales 21, 22 peuvent être portées à coulissement par un cadre 100 constitué de montants 101, 102 et de traverses 103, 104, 105, soudés, qui définissent l'enveloppe du panier. Le cadre 100 permet en particulier de renforcer la rigidité du panier par rapport aux modes de réalisation précédemment décrits.

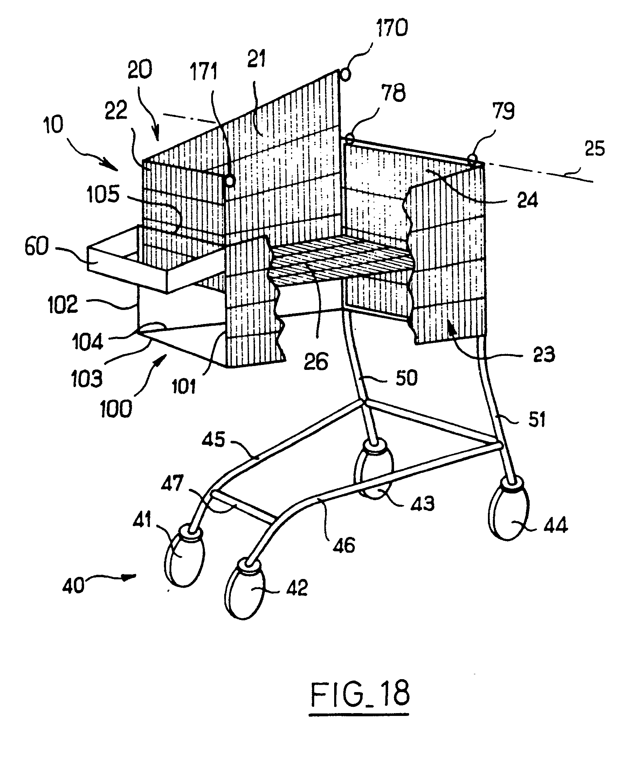

Selon la variante de réalisation illustrée sur la figure 18, de façon identique au mode de réalisation représenté sur la figure 14, le fond 26 est solidaire des parois latérales orthogonales 22 et 21 et forme avec celles-ci un ensemble rigide guidé à coulissement vertical sur le corps du chariot, par rapport aux autres parois latérales 23 et 24.

Cependant, selon la figure 18, la poignée 60 est prévue sur le petit côté du panier. Elle peut par exemple être solidaire de l'extrémité supérieure des montants 101, 102.

On aperçoit sur la figure 18, des boucles d'ancrage 170, 171, prévues aux extrémités supérieures des bords libres verticaux des parois latérales 21, 22, boucles 170, 171 avec lesquelles peuvent venir en prise des vérins de levage.

Bien entendu, le dispositif d'élévation du fond 26 et des parois 21, 22 pourra prendre appui sur d'autres éléments du chariot.

On aperçoit également sur la figure 18 la paroi transversale 24 (la plus large) montée à pivotement autour de boucles 78, 79, sur une tringle horizontale supérieur 180, coaxiale à l'axe 25.

La variante de réalisation illustrée sur la figure 18 facilite le placement du côté transversal 24, le plus large, près de la caissière sans que la poignée 60 gêne celle-ci. Il s'agit là d'un avantage important dans la mesure où les produits lourds (liquides par exemple) tendent à être accumulés le long de cette paroi puisque le fond 26 penche vers celle-ci.

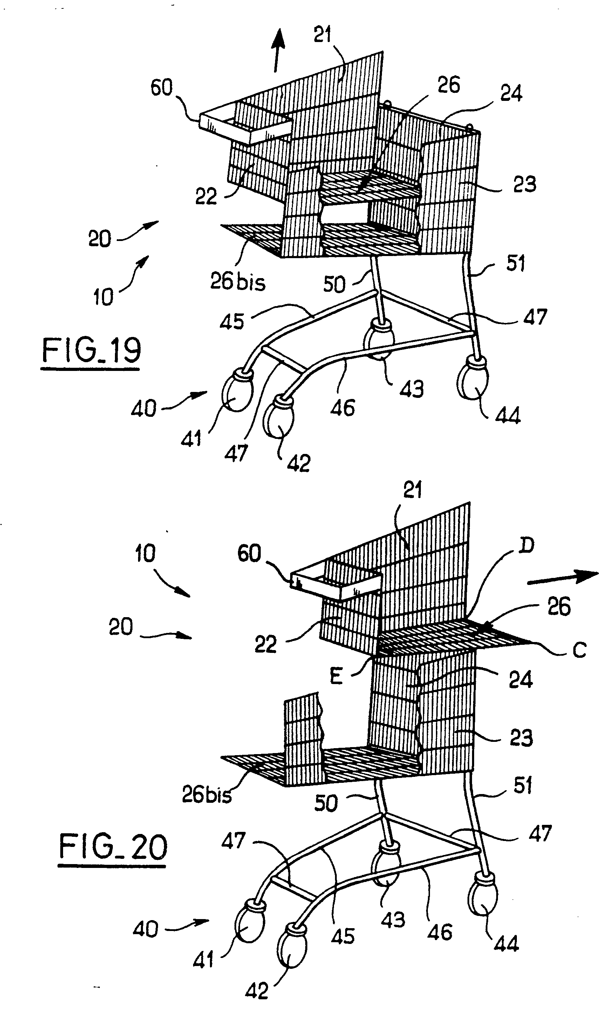

Selon la variante de réalisation illustrée sur les figures 19 et 20, le fond 26 est solidaire des parois latérales orthogonales 21 et 22 et forme avec celles-ci un ensemble rigide guidé à coulissement vertical sur le corps du chariot, par rapport aux autres parois latérales 23 et 24.

La paroi latérale 21 et une paroi longitudinale. La paroi 22 est la plus petite paroi transversale, opposée à la paroi pivotante 24.

La poignée 60 est de préférence solidaire du bord supérieur de la paroi 22.

Le cas échéant, un fond auxiliaire 26 bis peut être solidaire du corps de panier (paroi longitudinale 23 et cadre du volet pivotant 24) ; le fond auxiliaire 26 bis est placé sous le fond mobile 26.

Les moyens élévateurs coopérant avec le chariot illustré sur les figures 19 et 20 sont adaptés pour déplacer le fond 26 et les parois 21, 22 associées selon un mouvement combiné comprenant une première composante, verticale, (voir figure 19) pour élever le fond 26 du panier au dessus de la plus haut génératrice du corps de chariot (cadre portant le volet pivotant 24), puis une seconde composante, horizontale, pour rapprocher le fond 26 du panier et les articles portés par celui-ci, de la caissière (voir figure 20), et retour du fond 26 et des parois associées 21, 22 selon mouvement inverse.

Grâce à la cinématique précitée et au rapprochement des articles à portée de la caissière, le travail de celle-ci est largement facilité. La caissière peut en effet se contenter d'opérer un mouvement latéral horizontal du bras, sans torsion du corps.

De préférence pour assurer un bon équilibre du fond 26 et des parois latérales 21, 22, les moyens élévateurs sont adaptés pour venir en prise avec le fond 26 et/ou les parois latérales 21, 22, au niveau de trois points séparés, avantageusement trois points du fond 26. Très préférentiellement les moyens élévateurs sont adaptés pour venir én prise avec le fond 26 au niveau de trois coins C, D et E de celui-ci, à savoir le coin libre C et les coins D et E adjacents aux bords verticaux libres des parois 21 et 22.

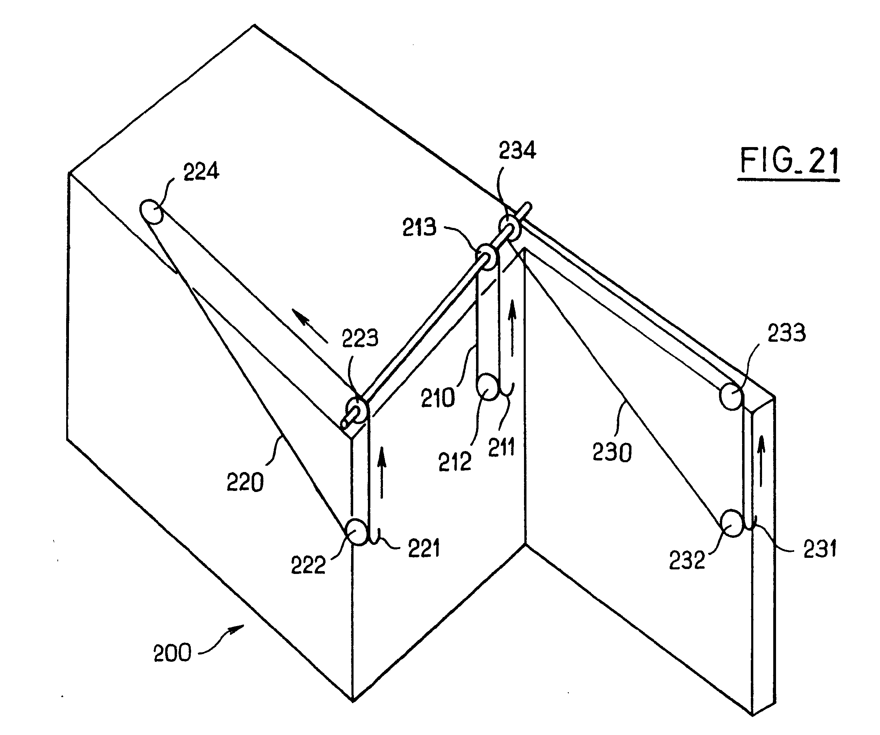

On a illustré schématiquement sur la figure 21 des moyens élévateurs 200 aptes à déplacer le fond 26 selon la cinématique illustrée sur les figures 19 et 20. Ces moyens élévateurs 200 comprennent trois chaînes 210, 220, 230 entraînés par des galets. La chaîne 210 porte un crochet 211 apte à venir en prise avec le coin libre C du fond 26. Elle est tendue entre deux galets superposés 212, 213 en vue d'un déplacement vertical du crochet (figure 19). Le crochet 211 peut venir en prise avec une glissière horizontale solidaire du fond 26 pour maintenir l'équilibre lors du déplacement horizontale du fond 26 (figure 20).

Les chariots 220, 230 portent des crochets 221, 231, destinés à venir en prise avec les coins D et E du fond 26. Elles sont tendues chacune sur trois galets 222, 223, 224 ; 232, 233, 234, disposés en triangle. Les galets 222, 223 et 232, 234 sont superposés pour guider les crochets 221, 231 selon un mouvement vertical apte à assurer l'élévation du fond 26 illustré sur la figure 19. Les galets 223, 224 et 233, 234 sont décalés horizontalement pour guider les crochets 221, 231 selon un mouvement horizontal apte à assurer le déplacement horizontal du fond 26 illustré sur la figure 20.

Bien entendu les moyens élévateurs 200 illustrés sur la figure 21 sont susceptibles d'être remplacés par tous moyens équivalents à base de vérins, bras pivotants...

Bien entendu la présente invention n'est pas limitée aux modes de réalisation particuliers qui viennent d'être décrits mais s'étend à touts variantes conformes à son esprit.

En particulier, l'homme de l'art comprendra aisément que les moyens de verrouillage du portillon amovible 30 et les moyens guidant ce portillon à translation verticale sur le corps de panier pourront prendre de nombreuses formes de réalisation.

Selon les modes de réalisation illustrés sur les figures 13, 14, 18, 19 et 20. Le corps de panier peut être abaissé par les moyens élévateurs, le fond 26 restant fixe, au lieu de soulever le fond du panier.

Le dispositif de manutention proposé dans le cadre de la présente invention, par rapport aux dispositifs antérieurs, présente notamment les avantages suivants : la manutention demandée au client est réduite de 50%, les carters ou tables de caisses sont moins longs, l'écoulement aux caisses est plus rapide, le dispositif est aisément adaptable aux magasins existants, le chariot conforme à la présente invention présente les mêmes côtés, le même poids et le même encombrement au stockage que les chariots existants.

Le cas échéant, le fond 26 du panier peut être équipé d'un tapis roulant ou encore d'un système de rouleaux, galets ou équivalents, pour faciliter la préhension des articles par une cassière. Le tapis roulant ou équivalent peut être entraîné par des moyens associés prévus au niveau de la caisse d'enregistrement.

## Revendications

1. Dispositif de manutention, en particulier pour magasins à libre service, du type comprenant un chariot mobile (10) équipé d'un panier (20) ouvert vers le haut apte à recevoir les articles à manutentionner, qui comporte un fond (26) généralement horizontal et des parois latérales (21, 22, 23, 24) généralement verticales, dans lequel le fond (26) est susceptible de translation verticale par rapport à au moins une partie de la paroi latérale (23), caractérisé par le fait que le chariot comprend des moyens de verouillage (80, 82) aptes à immobiliser sélectivement le fond (26) et ladite partie de paroi latérale (23) dans une position relative pour former un panier rigide apte à recevoir des articles et que le dispositif de manutention comprend en outre, au niveau d'un poste de déchargement un dispositif élévateur qui comprend des moyens élévateurs aptes à assurer un déplacement vertical relatif entre le fond du panier et ladite partie de paroi latérale.

2. Dispositif de manutention selon la revendication 1, caractérisé par le fait que le dispositif élévateur comprend en outre :

— des moyens d'arrimage aptes à venir en prise avec la partie de panier mobile par rapport au fond (26),

— des moyens de commande d'ouverture (90) aptes à coopérer avec les moyens de verrouillage (80, 82) du chariot pour autoriser sélectivement un déplacement vertical relatif entre cette partie de panier et le fond (26) du panier.

3. Dispositif de manutention selon la revendication 1, caractérisé par le fait que le panier (10) comprend au moins une partie de paroi latérale (23), formant portillon amovible (30) guidée à translation verticale sur le corps du chariot dont est solidaire le fond du panier et que le chariot comprend de plus des moyens de verrouillage (80, 82) aptes à immobiliser sélectivement le portillon (30) sur le corps de chariot pour fermer le côté correspondant du panier.

4. Dispositif de manutention selon la revendication 1, caractérisé par le fait que le fond (26) du panier est guidé à translation verticale sur le corps du chariot et que le chariot comprend de plus des moyens de verrouillage (80, 82) aptes à immobiliser sélectivement le fond (26) en partie inférieure du panier (20).

5. Dispositif de manutention selon la revendication 4, caractérisé par le fait que le fond (26) du panier (20) qui est guidé à translation verticale sur le corps du chariot (10), est solidaire d'une partie au moins d'une paroi latérale du panier (20).

6. Dispositif de manutention selon l'une des revendications 4 et 5, caractérisé par le fait que le fond (26) du panier (20) qui est guidé à translation verticale sur le corps du chariot (10) est solidaire de deux parois latérales (21, 22) orthogonales du panier (20).

7. Dispositif de manutention selon la revendication 3, caractérisé par le fait que le portillon amovible (30) est formé d'une partie au moins de deux parois latérales adjacentes et orthogonales du panier (22, 23 ; 70, 71).

8. Dispositif de manutention selon l'une des revendications 1 à 7, caractérisé par le fait que l'élément mobile par rapport au corps de chariot [portillon latéral (30) ou fond (26)] est guidé à translation dans des glissières verticales (36) ménagées sur le chariot.

9. Dispositif de manutention selon l'une des revendications 1 à 7, caractérisé par le fait que l'élément mobile par rapport au corps de chariot [portillon (30) ou fond (26)] est muni d'anneaux (35) guidés à translation sur des tiges verticales (38) solidaires du corps de chariot.

10. Dispositif de manutention selon l'une des revendications 1 à 9, caractérisé par le fait que les moyens de verrouillage (80, 82) sont adaptés pour guider le portillon (30) à pivotement autour d'un axe horizontal (25) adjacent à la génératrice supérieure du portillon.

11. Dispositif de manutention selon l'une des revendications 1 à 10, caractérisé par le fait que le chariot (10) comprend une embase (40) munie d'une pluralité de roulette (41, 42, 43, 44) et que le panier (20) est supporté par l'embase (40) par l'intermédiaire de deux montants (50, 51), les montants étant raccordés au panier (20) en position adjacente au côté (23) de celui-ci délimité au moins partiellement par le portillon amovible (30).

12. Dispositif de manutention selon l'une des revendications 1 à 11, dans lequel le chariot (10) comprend une poignée (60) adaptée pour être tenue par l'utilisateur pour pousser le chariot, caractérisé par le fait que la poignée (60) est déplaçable entre une position d'utilisation dans laquelle la poignée s'étend horizontalement et est fixée rigidement sur le corps du panier (20) et une position de stockage dans laquelle la poignée (60) s'étend sensiblement verticalement en position adjacente à un côté du panier délimité par une paroi apte à pivoter autour d'un axe horizontal (25).

13. Dispositif de manutention selon l'une des revendications 1 à 12, caractérisé par le fait que les moyens de verrouillage comprennent des taquets amovibles (80) portés par l'élément mobile (fond du panier ou portillon latéral) (30, 26) ou le corps de panier (20), des butées (82) complémentaires solidaires du corps du panier (20) ou de l'élément mobile (30, 26), et des moyens élastiques (84) aptes à solliciter les taquets (80) en prise avec les butées (82), tout en autorisant le retrait des taquets (80) en position escamotée dans laquelle les taquets (80) ne sont plus en prise avec lesdites butées (82).

14. Dispositif de manutention selon l'une des revendications 1 à 12, caractérisé par le fait que les moyens de verrouillage comprennent des taquets (80) solidaires de l'élément mobile (fond du panier ou portillon latéral) (30, 26) ou du corps de panier (20), des butées complémentaires (82) amovibles portées par le corps de panier (20) ou l'élément amovible (30, 26) et des moyens élastiques (84) aptes à solliciter les butées (82) en prise avec les taquets (80) tout en autorisant le retrait des butées (82) en position escamotée dans laquelle les taquets (80) ne sont plus en prise avec lesdites butées (82).

15. Dispositif de manutention selon l'une des revendications 1 à 14, caractérisé par le fait que le portillon (30) guidé à translation verticale sur le corps de chariot comprend deux parois orthogonales (70, 71) dont l'une est composée d'un cadre (72) qui porte un volet (77) à pivotement autour d'un axe horizontal.

16. Dispositif de manutention selon l'une des revendications 1 à 15, caractérisé par le fait qu'il comprend en outre des moyens d'entraînement aptes à déplacer le chariot d'une position accolée à une caisse en vue d'un déplacement vertical relatif : fond du panier/partie de paroi latérale, vers une position d'alignement avec l'intervalle entre deux caisses adjacentes.

17. Dispositif de manutention selon la revendication 16, caractérisé par le fait que les moyens d'entraînement procèdent par pivotement du chariot.

18. Dispositif de manutention selon la revendication 16, caractérisé par le fait que les moyens d'entraînement procèdent par translation du chariot.

19. Dispositif de manutention selon la revendication 1, caractérisé par le fait qu'il comprend un chariot mobile dont le panier (20) comprend un fond (26) solidaire de deux parois latérales orthogonales (21, 22) et susceptible de translation verticale par rapport au corps de chariot et aux autres parois latérales (23, 24).

20. Dispositif de manutention selon l'une des revendications 1 et 19, caractérisé par le fait que les moyens élévateurs (200) sont adaptés pour déplacer le fond (26) selon un mouvement combiné comprenant une première composante, verticale, pour élever le fond (26) du panier au dessus de la plus haute génératrice du corps de chariot, puis une seconde composante horizontale, pour rapprocher le fond (26) du panier et les articles portés par celui-ci, de la caissière.

**Patentansprüche**

1. Beförderunsvorrichtung, insbesondere für Selbstbedienungsläden, vom Typ mit einem beweglichen Wagen (10), der mit einem Korb (20) versehen ist, der nach oben offen ist, geeignet, die zu befördernden Artikel aufzunehmen, der einen im allgemeinen horizontalen Boden (26) und vertikale Seitenwände (21, 22, 23, 24) aufweist, in denen der Boden (26) sich vertikal bezüglich wenigstens eines Teils der Seitenwand (23) bewegen kann, dadurch gekennzeichnet, daß der Wagen Verriegelungseinrichtungen (80, 82) aufweist, die dazu dienen, wahlweise den Boden (26) und den genannten Bereich der Seitenwand (23) in eine relative Stellung festzulegen, um einen festen Korb zu bilden, der geeignet ist, Artikel aufzunehmen, daß die Förderungsvorrichtung weiterhin auf der Höhe einer Ausgabestelle eine Anhebevorrichtung aufweist, die Anhebeeinrichtungen aufweist, die dazu dienen, eine vertikale Bewegung bezüglich des Bodens des Korbes und dem Bereich der Seitenwand sicherzustellen.

2. Beförderungsvorrichtung nach Anspruch 1, dadurch gekennzeichnet, daß die Anhebevorrichtung weiterhin aufweist :

Verstaueinrichtungen, die geeignet sind, in Eingriff mit dem bewegbaren Bereich des Korbes bezüglich des Bodens (26) zu kommen,

Einrichtungen zur Öffnungssteuerung (90), die geeignet sind, mit den Verriegelungseinrichtungen (80, 82) des Wagens zusammenzuwirken, um ausgewählt eine vertikale relative Bewegung zwischen diesem Bereich des Korbes und dem Boden (26) des Korbes zu erlauben.

3. Beförderungsvorrichtung nach Anspruch 1, dadurch gekennzeichnet, daß der Korb (10) wenigstens einen Seitenwandbereich (23) aufweist, der eine bewegbare Tür (30) bildet, die in vertikaler Verschiebung auf dem Körper des Wagens, mit dem der Boden des Korbes verbunden ist, geführt ist, und daß der Wagen weiterhin Verriegelungseinrichtungen (80, 82) aufweist, die geeignet sind, wahlweise die Tür (30) auf dem Körper des Wagens festzulegen, um die entsprechende Seite des Korbes zu schließen.

4. Beförderungsvorrichtung nach Anspruch 1, dadurch gekennzeichnet, daß der Boden (26) des Korbes in der vertikalen Bewegung auf dem Körper des Wagens geführt ist und daß der Wagen weiterhin Verriegelungseinrichtungen (80,82) aufweist, die geeignet sind, wahlweise den Boden (26) im unteren Bereich des Korbes (20) festzulegen.

5. Beförderungsvorrichtung nach Anspruch 4, dadurch gekennzeichnet, daß der Boden (26) des Korbes (20), der in vertikaler Bewegung auf dem Körper des Wagens (10) geführt ist, mit wenigstens einem Bereich einer Seitenwand des Korbes (20) verbunden ist.

6. Beförderungsvorrichtung nach einem der Ansprüche 4 oder 5, dadurch gekennzeichnet, daß der Boden (26) des Korbes (20), der in vertikaler Bewegung an dem Körper des Wagens (10) geführt ist, mit zwei orthogonalen Seitenwänden (21, 22) des Korbs (20) verbunden ist.

7. Beförderungsvorrichtung nach Anspruch 3, dadurch gekennzeichnet, daß die bewegbare Tür (30) gebildet wird aus wenigstens einem Bereich der beiden benachbarten und orthogonalen Seitenwände des Korbes (22, 23 ; 70, 71).

8. Beförderungsvorrichtung nach einem der Ansprüche 1 bis 7, dadurch gekennzeichnet, daß das bewegliche Element bezüglich des Körpers des Wagens [Seitentür (30) oder Boden (26)] in einer Verschiebebewegung auf vertikalen Gleitbahnen (36) geführt ist, die an dem Wagen ausgebildet sind.

9. Beförderungsvorrichtung nach einem der Ansprüche 1 bis 7, dadurch gekennzeichnet, daß das bewegliche Element bezüglich des Körpers des Wagens [Türe (30) oder Boden (26)] mit Ringen (35) versehen ist, die in einer Verschiebebewegung auf vertikalen Stangen (38) geführt sind, die mit dem Körper des Wagens verbunden sind.

10. Beförderungsvorrichtung nach einem der Ansprüche 1 bis 9, dadurch gekennzeichnet, daß die Verriegelungseinrichtungen (80, 82) geeignet sind, die Türe (30) in einer Schwenkbewegung um eine horizontale Achse (25) in der Nähe der oberen Mantellinie der Türe zu führen. ·

11. Beförderugsvorrichtung nach einem der Ansprüche 1 bis 10, dadurch gekennzeichnet, daß der Wagen (10) einen Unterbau (40) aufweist, der mit einer Mehrzahl von Rollen (41, 42, 43, 44) versehen ist, und daß der Korb (20) von dem Unterbau (40) mittels zweier Stützen (50, 51) getragen wird, wobei die Stützen mit dem Korb (20) in einer Position in der Nähe von dessen Seite (23) verbunden sind, die wenigstens teilweise begrenzt ist von der beweglichen Tür (30).

12. Beförderungsvorrichtung nach einem der Ansprüche 1 bis 11, bei der der Wagen (10) einen Griff (60) aufweist, der geeignet ist, von dem Verwender gehalten zu werden, um den Wagen zu schieben, dadurch gekennzeichnet, daß der Handgriff (60) zwischen einer Verwendungsstellung, in der sich der Handgriff horizontal erstreckt und starr an dem Körper des Korbes (20) befestigt ist, und einer Ruhestellung bewegbar ist, in der der Handgriff (60) sich im wesentlichen vertikal in der Nähe einer Seite des Korbes erstreckt, der durch eine Seitenwand begrenzt ist, die geeignet ist, um eine horizontale Achse (25) zu schwenken.

13. Beförderungsvorrichtung nach einem der Ansprüche 1 bis 12, dadurch gekennzeichnet, daß die Verriegelungseinrichtungen entfernbare Mitnehmer (80) aufweisen, die von dem bewegbaren Element (Boden des Korbes oder Seitentür) (30, 26) oder dem Körper des Korbes (20) getragen wird, komplementäre beschläge (82) aufweist, die mit dem Körper des Korbes (20) oder dem beweglichen Element (30, 26) verbunden sind, und elastische Einrichtungen (84) aufweist, die geeignet sind, die Mitnehmer (80) in Eingriff mit den beschlägen (82) zu beaufschlagen, wobei stets der Rückzug der Mitnehmer (80) in die eingezogene Stellung, in der die Mitnehmer (80) nicht mehr in Eingriff mit den Anschlägen (82) sind, ermöglicht wird.

14. Beförderungsvorrichtung nach einem der Ansprüche 1 bis 12, dadurch gekennzeichnet, daß die Verriegelungseinrichtungen Mitnehmer (80) aufweisen, die mit einem beweglichen Element (Boden des Korbes oder Seitentür) (30, 26) oder dem Körper des Korbes (20) verbunden sind, entfernbar komplementäre beschläge (82), die von dem Körper des Korbes (20) oder dem entfernbaren Element (30, 26) getragen wird, und elastische Einrichtungen (84) aufweist, die geeignet sind, die Anschläge (82) in Eingriff mit den Mitnehmern (80) zu beaufschlagen unter Erlauben des Rückszugs der beschläge (82) in die eingezogene Stellung, in der die Mitnehmer (80) nicht mehr in Eingriff mit den Anschlägen (82) stehen.

15. Beförderungsvorrichtung nach einem der Ansprüche 1 bis 14, dadurch gekennzeichnet, daß die in vertikaler Richtung an dem Körper des Wagens gefürte Tür (30) zwei orthogonale Seitenwände (70, 71) aufweist, von denen eine gebildet wird aus einem Rahmen (72), der eine Klappe (77) mit Schwenkung um eine horizontale Achse aufweist.

16. Beförderungsvorrichtung nach einem der Ansprüche 1 bis 15, dadurch gekennzeichnet, daß sie weiterhin Antriebseinrichtungen aufweist, die geeignet sind, den Wagen in eine Stellung zu bewegen, die an eine Kasse angehängt ist, im Hinblick auf eine relativ vertikale Bewegung : Boden des Korbes/Bereich der Seitenwand, in eine Ausrichtstellung mit einem Zwischenraum zwischen zwei benachbarten Kassen.

17. Beförderungsvorrichtung nach Anspruch 16, dadurch gekennzeichnet, daß die Antriebseinrichtungen durch Schwenken des Wagens vorgehen.

18. Beförderungsvorrichtung nach Anspruch 16, dadurch gekennzeichnet, daß die Antriebsvorrichtungen durch Längsbewegung des Wagens vorgehen.

19. Beförderungsvorrichtung nach Anspruch 1, dadurch gekennzeichnet, daß sie einen beweglichen Wagen aufweist, dessen Korb (20) einen Boden (26) aufweist, der mit zwei orthogonalen Seitenwänden (21, 22) verbunden ist und geeignet ist, eine vertikale Verschiebung bezüglich des Wagenkörpers und den anderen Seitenwänden (23, 24) vorzunehmen.

20. Beförderungsvorrichtung nach einem der Ansprüche 1 bis 19, dadurch gekennzeichnet, daß die Anhebeeinrichtungen (200) geeignet sind, den Boden (26) gemäß einer kombinierten Bewegung zu verschieben, die eine erste vertikale Komponente aufweist, um den Boden (26) des Korbes über der höchsten Mantellinie des Körpers des Wagens anzuheben, sodann eine zweite horizontale Komponente aufweist, um den Boden (26) des Korbes und die durch ihn getragenen Artikel der Kassiererin zuzuführen.

## Claims

1. Handling device, in particular for self-service shops, of the type comprising a movable trolley (10) equipped with a basket (20) open at the top and able to receive the articles to be handled, which comprises a generally horizontal base (26) and generally vertical side walls (21, 22, 23, 24), in which the base (26) is able to move vertically with respect to at least one side wall part (23), characterised by the fact that the trolley comprises locking means (80, 82) able to immobilise selectively the base (26) and said side wall part (23) in a relative position in order to form a rigid basket able to receive articles and that the handling device also comprises, at the level of an unloading station, an elevator device which comprises elevator means able to ensure a relative vertical movement between the base of the basket and said side wall part.

2. Handling device according to Claim 1, characterised by the fact that the elevator device also comprises :

— packing means able to come into engagement with the part of the basket able to move with respect to the base (26),

— opening control means (90) able to cooperate with the locking means (80, 82) of the trolley in order to allow selectively a relative vertical movement between this part of the basket and the base (26) of the basket.

3. Handling device according to Claim 1, characterised by the fact that the basket (10) comprises at least one side wall part (23), forming a removable gate (30) guided to move vertically on the body of the trolley with which the base of the basket is integral and that the trolley also comprises locking means (80, 82) able to immobilise selectively the gate (30) on the trolley body in order to close the corresponding side of the basket.

4. Handling device according to Claim 1, characterised by the fact that the base (26) of the basket is guided to move vertically on the body of the trolley and that the trolley also comprises locking means (80, 82) able to immobilise selectively the base (26) in the lower part of the basket (20).

5. Handling device according to Claim 4, characterised by the fact that the base (26) of the basket (20) which is guided to move vertically on the body of the trolley (10), is integral with at least part of a side wall of the basket (20).

6. Handling device according to one of Claims 4 and 5, characterised by the fact that the base (26) of the basket (20) which is guided to move vertically on the body of the trolley (10) is integral with two orthogonal side walls (21, 22) of the basket (20).

7. Handling device according to Claim 3, characterised by the fact that the removable gate (30) is formed by at least part of two adjacent and orthogonal side walls of the basket (22, 23 ; 70, 71).

8. Handling device according to one of Claims 1 to 7, characterised by the fact that the member which is able to move with respect to the trolley body [side gate (30) or base (26)] is guided to move in vertical guides (36) provided on the trolley.

9. Handling device according to one of Claims 1 to 7, characterised by the fact that the member which is able to move with respect to the trolley body [gate (30) or base (26)] is provided with rings (35) guided to move on vertical rods (38) integral with the trolley body.

10. Handling device according to one of Claims 1 to 9, characterised by the fact that the locking means (80, 82) are adapted to guide the gate (30) to pivot about a horizontal axis (25) adjacent to the upper generatrix of the gate.

11. Handling device according to one of Claims 1 to 10, characterised by the fact that the trolley (10) comprises a base (40) provided with a plurality of small wheels (41, 42, 43, 44) and that the basket (20) is supported by the base (40) through the intermediary of two uprights (50, 51), the uprights being connected to the basket (20) in a position adjacent to the side (23) of the latter defined at least partly by the removable gate (30).

12. Handling device according to one of Claims 1 to 11, in which the trolley (10) comprises a handle (60) adapted to be held by the user for pushing the trolley, characterised by the fact that the handle (60) is able to move between a position for use in which the handle extends horizontally and is fixed rigidly to the body of the basket (20) and a storage position in which the handle (60) extends substantially vertically in a position adjacent to one side of the basket defined by a wall able to pivot about a horizontal axis (25).

13. Handling device according to one of Claims 1 to 12, characterised by the fact that the locking means comprise removable lugs (80) supported by the movable member (base of the basket or side gate) (30, 26) or the body of the basket (20), complementary abutments (82) integral with the body of the basket (20) or the movable member (30, 26) and spring means (84) able to bias the lugs (80) into engagement with the abutments (82), whilst allowing the withdrawal of the lugs (80) into the retracted position in which the lugs (80) are no longer in engagement with said abutments (82).

14. Handling device according to one of Claims 1 to 12, characterised by the fact that the locking means comprise lugs (80) integral with the movable member (base of the basket or side gate) (30, 26) or the body of the basket (20), removable complementary abutments (82) supported by the body of the basket (20) or the removable member (30, 26) and spring means (84) able to bias the abutments (82) into engagement with the lugs (80) whilst allowing the withdrawal of the abutments (82) into the retracted position in which the lugs (80) are no longer in engagement with said abutments (82).

15. Handling device according to one of Claims 1 to 14, characterised by the fact that the gate (30) guided to move vertically on the trolley body comprises two orthogonal walls (70, 71) whereof one is composed of a frame (72) which supports a flap (77) able to pivot about a horizontal axis.

16. Handling device according to one of Claims 1 to 15, characterised by the fact that it also comprises drive means able to move the trolley from a position side by side with a cash desk with a view to a relative vertical movement : base of the basket/side wall part, towards a position of alignment with the gap between two adjacent cash desks.

17. Handling device according to Claim 16, characterised by the fact that the drive means proceed by pivoting of the trolley.

18. Handling device according to Claim 16, characterised by the fact that the drive means proceed by translation of the trolley.

19. Handling device according to Claim 1, characterised by the fact that it comprises a movable trolley whereof the basket (20) comprises a base (26) integral with two orthogonal side walls (21, 22) and able to move vertically with respect to the trolley body and to the other side walls (23, 24).

20. Handling device according to one of Claims 1 and 19, characterised by the fact that the elevator means (200) are adapted for moving the base (26) in a combined movement comprising a first vertical component, for raising the base (26) of the basket above the highest generatrix of the trolley body, then a second horizontal component, for moving the base (26) of the basket and the articles supported by the latter, closer to the cashier.

FIG.1

FIG.2

FIG_3

EP 0 277 880 B1

## FIG_4

FIG.5

FIG_7

FIG_6

FIG.8

FIG.9

FIG.10

FIG_11

FIG_12

FIG.13

FIG.14

FIG.15

FIG.16

| | |
|---|---|
| ARRIMAGE | 150 |
| DEVERROUILLAGE | 151 |
| LEVAGE | 152 |
| DESCENTE | 153 |
| VERROUILLAGE | 154 |
| LIBERATION | 155 |
| EVACUATION | 156 |

FIG.17

FIG_18

FIG.19

FIG.20

FIG. 21

EP 0 277 880 B1